# FASCICULE DE BREVET EUROPEEN

(11) **EP 1 447 607 B1**
(45) Date de publication et mention de la délivrance du brevet: **26.04.2006**
(21) Numéro de dépôt: 04290340.1
(22) Date de dépôt: 10.02.2004
(51) Int. Cl.: F16L 19/04, F16L 33/30

(54) **Embout de raccordement d'un organe a une extrémité de conduite et procédé de fabrication d'un tel embout**
Rohrstutzen und dessen Herstellungsverfahren
Pipe nipple and method of manufacturing the same

(30) Priorité: 17.02.2003 FR 0301877
(43) Date de publication de la demande: 18.08.2004
(73) Titulaire: NOBEL PLASTIQUES, 51300 Marolles (FR)
(72) Inventeur: Dabouineau Johann, 51400 Dampierre au Temple (FR)
(74) Mandataire: Lavialle, Bruno François Stéphane

(56) Documents cités:
- DE-A- 3 520 949
- US-A- 4 603 890
- US-B1- 6 199 915

## Description

La présente invention concerne un embout de raccordement d'une extrémité de conduite et d'un organe d'un circuit de transport de fluide. Un tel organe est par exemple un organe de raccordement entre plusieurs conduites, un organe émetteur de fluide, tel qu'une pompe, ou un organe récepteur de fluide, tel qu'un réservoir. L'invention concerne également un procédé de fabrication de cet embout.

### ARRIERE PLAN DE L'INVENTION

Un embout de raccordement comporte généralement un corps tubulaire ayant une première extrémité pourvue de moyens de liaison à l'organe et une deuxième extrémité destinée à être introduite dans l'extrémité de conduite. La deuxième extrémité comporte une portion terminale pourvue d'une gorge recevant un joint d'étanchéité annulaire et déformable, et des reliefs annulaires d'accrochage s'étendant en saillie entre la gorge et la première extrémité. Un embout de raccordement de ce type est par exemple un embout dit à dents de sapin du nom de la forme des reliefs d'accrochage.

Un tel embout est généralement réalisé par injection de matière plastique dans un moule comportant un noyau cylindrique sur lequel sont refermées deux demi-coquilles ayant chacune une empreinte correspondant à une moitié longitudinale de l'embout. Il résulte de ce mode de fabrication un défaut s'étendant dans le plan longitudinal médian de l'embout au niveau du plan de joint des deux demi-coquilles.

Ce défaut, qui peut avoir la forme d'un léger renflement ou d'un redan dû à un décalage des demi-coquilles, est particulièrement gênant au niveau du fond de la gorge car il risque d'être à l'origine de fuites s'il est supérieur aux défauts admissibles par le joint d'étanchéité. De telles fuites risquent tout particulièrement d'apparaître à des températures supérieures à une centaine de degrés et à des pressions supérieures à 2,5 bars, conditions que l'on rencontre notamment dans les circuits de transport de carburant situés dans le compartiment moteur des véhicules automobiles.

Une solution à ce problème serait de prévoir lors de la fabrication un usinage visant à éliminer le défaut de surface précité. Toutefois, un tel usinage s'avère relativement coûteux et ce d'autant plus que le fond de la gorge est relativement difficile d'accès pour un outil.

### OBJET DE L'INVENTION

Il serait donc intéressant de disposer d'un moyen de raccordement permettant d'assurer de façon fiable une étanchéité entre l'organe et l'extrémité de conduite.

### BREVE DESCRIPTION DE L'INVENTION

A cet effet, l'invention à pour objet un embout de raccordement d'un organe à une extrémité de conduite qui comporte un corps tubulaire ayant une première extrémité pourvue de moyens de liaison à l'organe et une deuxième extrémité destinée à être introduite dans l'extrémité de conduite, la deuxième extrémité comportant une portion terminale pourvue d'une gorge recevant un élément annulaire d'étanchéité, et au moins un relief d'accrochage s'étendant en saillie entre la gorge et la première extrémité. L'embout de raccordement se caractérise en ce que, du côté opposé au relief d'accrochage, la gorge a un flanc formé par une face d'une bague rapportée sur la portion terminale.

Ainsi, la portion terminale peut être obtenue directement par moulage sans présenter de défaut ou une opération d'usinage peut facilement être réalisée avant la mise en place de la bague pour éliminer le défaut. Le risque de fuite est ainsi diminué voire éliminé sans que le coût de fabrication s'en ressente de manière notable.

Par ailleurs, avec les embouts de raccordement de l'art antérieur, la mise en place de l'élément annulaire d'étanchéité consiste à emmancher à force la portion terminale de l'embout de raccordement dans l'élément annulaire d'étanchéité jusqu'à ce que ce dernier rentre dans la gorge. Il en résulte un risque de détérioration du joint d'étanchéité. Avec l'embout de raccordement de l'invention, l'élément d'étanchéité peut être mis en place avant que la bague ne soit rapportée sur la portion terminale de sorte que les risques de détérioration de l'élément annulaire d'étanchéité sont limités.

De préférence, la bague est extérieurement chanfreinée à l'opposé de la gorge.

De la sorte, la bague ne gêne pas l'introduction de l'embout de raccordement dans l'extrémité de conduite.

De préférence encore, la portion terminale comprend un épaulement de butée à l'enfoncement de la bague sur le corps tubulaire.

L'épaulement de butée à l'enfoncement de la bague permet l'obtention d'une gorge ayant une largeur précise.

L'invention a également pour objet un procédé de fabrication d'un embout de raccordement présentant l'une des caractéristiques précitées, le procédé comportant les étapes de :
- réaliser par moulage au moins la portion terminale en utilisant un moule en une seule pièce dans laquelle est ménagée une cavité pour former une surface externe de la portion terminale,
- mettre en place l'élément d'étanchéité, la bague rapportée sur la portion terminale.

La surface externe de la portion terminale étant obtenue à partir d'un moule en une seule pièce, la surface externe présente peu de défauts.

Avantageusement, l'élément d'étanchéité est mis en place avant la bague rapportée.

Ainsi, l'élément d'étanchéité est mis en place sans subir de déformation importante. Ceci limite les risques de détérioration.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une demi-vue en coupe longitudinale d'un embout de raccordement conforme à l'invention avant son introduction dans une extrémité de conduite,
- la figure 2 est une vue partielle en coupe longitudinale d'un moule utilisé pour la fabrication de l'embout de raccordement conforme à l'invention.

### DESCRIPTION DETAILLEE DE L'INVENTION

L'embout de raccordement ici décrit est destiné au raccordement d'une extrémité de conduite 100 à un organe 200 d'un circuit de transport de fluide. Le circuit de transport de fluide est ici un circuit de carburant d'une véhicule automobile et l'organe, partiellement représenté, est par exemple un organe émetteur de fluide ou un organe récepteur de fluide tels qu'une pompe, un réservoir, une canalisation...

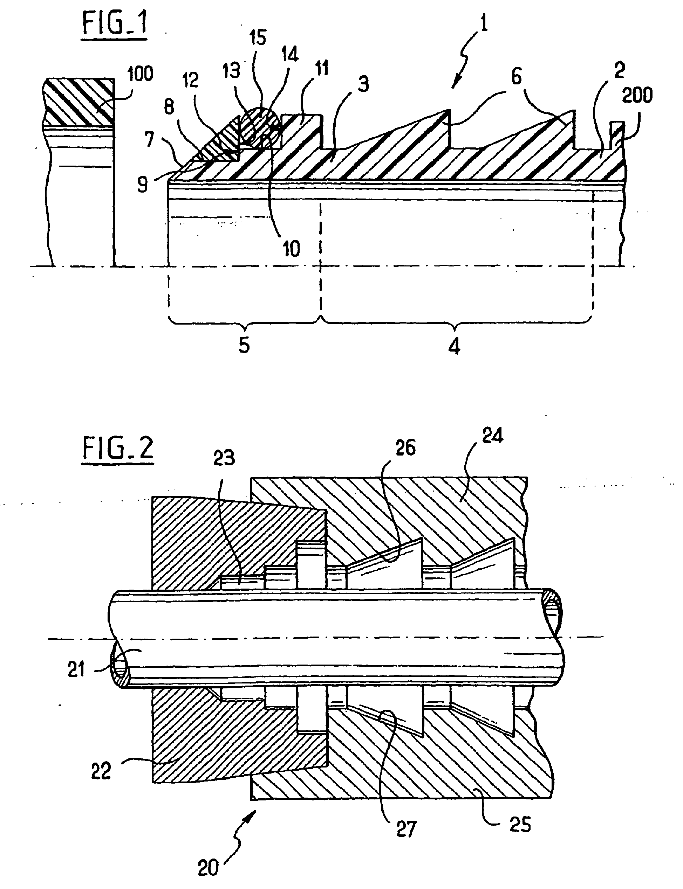

En référence plus particulièrement à la figure 1, l'embout de raccordement conforme à l'invention comporte un corps tubulaire généralement désigné en 1 ayant une première extrémité 2 et une deuxième extrémité 3.

La première extrémité 2 est ici réalisée en une seule pièce avec l'organe 200. L'embout de raccordement peut également être indépendant de l'organe 200. Dans ce cas, la première extrémité 2 du corps tubulaire 1 peut être pourvue de moyens de type encliquetable pour assurer la liaison avec l'organe 200, tels que la liaison par exemple des pattes élastiquement déformables ou un verrou radialement déplaçable permettant une liaison démontable avec l'organe ; ou bien la première extrémité 2 peut être emmanchée à force dans un orifice de l'organe et comporter alors des moyens de liaison tels que par exemple des reliefs d'accrochage de type dents de sapin. La première extrémité 3 de l'embout de raccordement peut également être collée ou soudée à l'organe 200.

La deuxième extrémité 3 est divisée axialement en deux portions successives, à savoir une portion d'accrochage 4 qui s'étend du côté de la première extrémité 2 du corps tubulaire 1 et une portion terminale 5 qui s'étend du côté de la portion d'accrochage 4 opposé à la première extrémité 2.

La portion d'accrochage 4 est pourvue extérieurement de reliefs d'accrochage 6 de forme annulaire et ayant une section en dents de sapin.

La portion terminale 5 a une extrémité libre 6 chanfreinée et une surface externe étagée comportant de l'extrémité libre 6 jusqu'à la portion d'accrochage 4 : un premier tronçon 8 relié par un épaulement 9 à un deuxième tronçon 10 qui a un diamètre plus grand que le premier tronçon 8 et en saillie duquel s'étend une collerette 11 de diamètre externe légèrement inférieur au diamètre externe des reliefs d'accrochage 6.

Une bague 12 est montée sur le premier tronçon 8 de telle manière que la bague 12 a une face latérale radiale 13 en appui de l'épaulement 9 reliant les premier et deuxième tronçons 8, 10. La bague 12 est chanfreinée extérieurement à l'opposé de la face latérale radiale 13.

La face latérale radiale 13 de la bague 12 et la face latérale 14 de la collerette 11 faisant face à la bague 12 définissent entre elles une gorge dont le fond est formé par la surface externe du deuxième tronçon 10.

Un élément annulaire d'étanchéité, ici un joint déformable 15, est disposé dans la gorge de telle manière qu'il s'étende en saillie de la collerette 11 et de la bague 12.

La bague 12 est ici emmanchée à force sur le premier tronçon 8 mais peut également être montée libre sur celui-ci puis collée ou soudée à celui-ci. La soudure peut être réalisée par vibration, rotation, ultrasons, thermiquement...

La deuxième extrémité 3 du corps tubulaire 1 est destinée à être emmanchée à force dans l'extrémité de conduite 100 pour assurer le raccordement de l'organe 200 à l'extrémité de conduite 100.

L'embout de raccordement conforme à l'invention est ici réalisé par injection de matière thermoplastique dans un moule généralement désigné en 20 (voir la figure 2).

Le moule 20 comporte un noyau cylindrique tubulaire 21 sur lequel est monté une partie de moule 22 en une seule pièce présentant une cavité formant une empreinte 23 correspondant à la forme extérieure de la portion terminale 5 du corps tubulaire 1 de l'embout de raccordement.

Le moule 20 comporte également deux demi-coquilles 24, 25 qui sont refermées sur le noyau cylindrique et sur l'extrémité adjacente de la partie de moule 23 et qui comporte chacune une empreinte 26, 27 correspondant à une moitié axiale de la première extrémité 2 et de la portion d'accrochage 4 de la deuxième extrémité 3du corps tubulaire 1. Lorsque l'embout de raccordement est en une seule pièce avec l'organe 200, les empreintes 26, 27 correspondent également à au moins une partie de l'organe 200.

Le moule 20 comprend aussi des moyens d'admission du matériau thermoplastique dans les empreintes, ces moyens connus en eux-mêmes n'étant pas représentés.

Ce procédé de moulage est particulièrement intéressant puisqu'il permet de réaliser une portion terminale ne comportant pas de défaut de type plan de joint.

Après le moulage par injection, le joint d'étanchéité 15 est mis en place sur le deuxième tronçon 10 puis la bague 12 est mise en place sur le premier tronçon 8 jusqu'à venir en butée de l'épaulement 9. Lorsque les caractéristiques d'extensibilité du joint le permettent, les opérations de mise en place précitées peuvent être inversées.

Bien entendu, l'invention n'est pas limitée au mode de réalisation décrit et on peut y apporter des variantes de réalisation sans sortir du cadre de l'invention tel que défini par les revendications.

En particulier, l'embout de raccordement conforme à l'invention pourrait être réalisé à partir d'un moule formé de deux demi-coquilles, le défaut dû au plan de joint étant éliminé par usinage avant mise en place de la bague.

En outre, dans le cas où l'embout assure le raccordement entre deux conduites, l'extrémité 2 peut avoir une structure en dents de sapin identique à celle de l'extrémité 3.

## Revendications

1. Embout de raccordement d'un organe (200)à une extrémité de conduite (100), comportant un corps tubulaire (1) ayant une première extrémité (2) pourvue de moyens de liaison à l'organe et une deuxième extrémité (3) destinée à être introduite dans l'extrémité de conduite, la deuxième extrémité comportant une portion terminale (5) pourvue d'une gorge (10, 13, 14) recevant un élément annulaire d'étanchéité (15), et au moins un relief d'accrochage (6) s'étendant en saillie entre la gorge et la première extrémité, **caractérisé en ce que**, du côté opposé au relief d'accrochage (6), la gorge a un flanc formé par une face (13) d'une bague (12) rapportée sur la portion terminale.

2. Embout de raccordement selon la revendication 1, **caractérisé en ce que** la bague (12) est extérieurement chanfreinée à l'opposé de la gorge (10).

3. Embout de raccordement selon la revendication 1 ou la revendication 2, **caractérisé en ce que** la portion terminale (5) comprend un épaulement (9) de butée à l'enfoncement de la bague (12) sur le corps tubulaire (1).

4. Procédé de fabrication d'un embout de raccordement selon l'une quelconque des revendications précédentes, **caractérisé en ce qu'**il comprend les étapes de :
- réaliser par moulage au moins la portion terminale (5) en utilisant un moule (22) en une seule pièce dans laquelle est ménagée une cavité (23) pour former une surface externe de la portion terminale (5),
- mettre en place l'élément d'étanchéité (15) et la bague rapportée (12).

5. Procédé de fabrication selon la revendication 4, **caractérisé en ce que** l'élément d'étanchéité (15) est mis en place avant la bague rapportée (12).

6. Procédé de fabrication selon la revendication 4 ou la revendication 5, **caractérisé en ce que** la bague (12) est montée libre sur la portion terminale (5) avant d'être fixée à celle-ci.

7. Procédé de fabrication selon la revendication 4 ou la revendication 5, **caractérisé en ce que** la bague (12) est emmanchée à force sur la portion terminale (15).

## Patentansprüche

1. Anschlussstück zur Verbindung eines Elements (200) mit einem Leitungsende (100), umfassend ein rohrförmiges Gehäuse (1) mit einem ersten Ende (2), das mit Mitteln zur Verbindung mit dem Element versehen ist, sowie mit einem zweiten Ende, das dazu bestimmt ist, in das Leitungsende eingefügt zu werden, wobei das zweite Ende einen Endabschnitt (5) umfasst, der mit einer Nut (10, 13, 14) versehen ist, die ein ringförmiges Dichtungselement (15) aufnimmt, und wobei sich zwischen der Nut und dem ersten Ende mindestens ein vorspringendes Verankerungsrelief (6) erstreckt, **dadurch gekennzeichnet, dass** die Nut auf der dem Verankerungsrelief (6) entgegengesetzten Seite eine Flanke hat, die aus einer Fläche (13) eines Ringes (12) gebildet ist, der auf den Endabschnitt aufgesetzt ist.

2. Anschlussstück nach Anspruch 1, **dadurch gekennzeichnet, dass** der Ring (12) auf der der Nut (10) abgewandten Seite außen abgeschrägt ist.

3. Anschlussstück nach Anspruch 1 oder 2, **dadurch gekennzeichnet, dass** der Endabschnitt (5) eine Anschlagsschulter (9) zur Begrenzung des Aufpressens des Ringes (12) auf das rohrförmige Gehäuse (1) hat.

4. Verfahren zum Herstellen eines Anschlussstückes nach einem der vorhergehenden Ansprüche, **dadurch gekennzeichnet, dass** es die Schritte umfasst:
- Formgießen mindestens des Endabschnittes (5) unter Verwendung einer einstückigen Form (22), in der ein Hohlraum (23) ausgebildet ist, um eine Außenfläche des Endabschnittes (5) auszubilden,
- Anbringen des Dichtungselements (15) und des aufgesetzten Ringes (12).

5. Herstellungsverfahren nach Anspruch 4, **dadurch gekennzeichnet, dass** das Dichtungselement (15) vor dem aufgesetzten Ring (12) angebracht wird.

6. Herstellungsverfahren nach Anspruch 4 oder Anspruch 5, **dadurch gekennzeichnet, dass** der Ring (12) frei drehbar auf dem Endabschnitt (5) gelagert ist, ehe er an demselben befestigt wird.

7. Herstellungsverfahren nach Anspruch 4 oder Anspruch 5, **dadurch gekennzeichnet, dass** der Ring (12) mit Kraft auf den Endabschnitt (15) aufgepresst wird.

## Claims

1. A coupling endpiece for coupling a member (200) to a pipe end (100), the endpiece comprising a tubular body (1) having a first end (2) provided with means for connecting to the member, and a second end (3) designed to be inserted in the pipe end, the second end having a terminal portion (5) provided with a groove (10, 13, 14) receiving an annular sealing element (15), and at least one catch-forming portion in relief (6) projecting between the groove and the first end, the endpiece being **characterized in that** on its side opposite from the catch-forming portion in relief (6) the groove has a flank formed by a face (13) of a separate ring (12) fitted onto the end portion.

2. A coupling endpiece according to claim 1, **characterized in that** the ring (12) has an outside chamfer facing away from the groove (10).

3. A coupling endpiece according to claim 1 or claim 2, **characterized in that** the terminal portion (5) has a shoulder (9) constituting an abutment against the ring (12) being pushed along the tubular body (1).

4. A method of manufacturing a coupling endpiece according to any preceding claim, the method being **characterized in that** it comprises the steps of:
· molding at least the terminal portion (5) by using a one-piece mold (22) in which a cavity (23) is provided to form an outside surface of the terminal portion (5); and
· putting the sealing element (15) and the separate ring (12) into place.

5. A method of manufacture according to claim 4, **characterized in that** the sealing element (15) is put into place before the separate ring (12).

6. A method of manufacture according to claim 4 or claim 5, **characterized in that** the ring (12) is mounted freely on the terminal portion (5) prior to being fastened thereto.

7. A method of manufacture according to claim 4 or claim 5, **characterized in that** the ring (12) is a force-fit on the end portion (15).
